# NOUVEAU FASCICULE DE BREVET EUROPEEN

(11) **EP 3 080 616 B2**
(45) Date de publication et mention de la décision concernant l'opposition: **15.11.2023**
(45) Mention de la délivrance du brevet: 03.06.2020
(21) Numéro de dépôt: 14827478.0
(22) Date de dépôt: 09.12.2014
(51) Int. Cl.: G01N 35/10

(54) **PROCÉDÉ DE DÉTERMINATION DE LA POSITION D'AU MOINS UN PION DE CARTOGRAPHIE**
VERFAHREN ZUR BESTIMMUNG DER POSITION MINDESTENS EINES KARTOGRAFIE-TOKENS
METHOD OF DETERMINING THE POSITION OF AT LEAST ONE CARTOGRAPHY TOKEN

(30) Priorité: 12.12.2013 FR 1362493
(43) Date de publication de la demande: 19.10.2016
(73) Titulaire: Diagnostica Stago, 92600 Asnières-sur- Seine (FR)
(72) Inventeur: ANTONIO, Pascal, F-78820 Juziers (FR); COCHELIN, Olivier, F-95210 Saint Gratien (FR); GREFFIER, Cyril, 78800 Houilles (FR)
(74) Mandataire: Ernest Gutmann - Yves Plasseraud S.A.S.
(86) Numéro de dépôt international: PCT/FR2014/053222
(87) Numéro de publication internationale: WO 2015/086977

(56) Documents cités:
- WO-A1-91/16675
- WO-A1-2005/059568
- WO-A1-2012/129105
- WO-A1-2012/129105
- US-A- 5 443 792
- US-A- 5 443 792
- US-A- 5 529 754
- US-A- 5 529 754
- US-A1- 2007 065 945
- US-A1- 2012 065 912

## Description

La présente invention concerne un procédé de détermination de la position d'au moins un pion de cartographie fixe d'un automate. L'invention s'applique en particulier à des dispositifs automatisés de diagnostic in vitro, notamment dans le domaine de l'hémostase.

Un tel dispositif ou automate comporte un bâti fixe sur lequel sont fixées des platines comportant des logements pour positionner des contenants se présentant sous la forme de flacons, de tubes ou de cuvettes de réaction. Le dispositif comporte, par exemple, une platine destinée à supporter des flacons contenant des produits réactifs, une platine destinée à supporter des tubes contenant des échantillons de plasma, et une platine destinée à supporter des cuvettes de réaction au sein desquelles sont effectuées des mesures.

Le dispositif comporte en outre un bras motorisé ou plus comportant chacun une tête mobile suivant des coordonnées cartésiennes (X, Y, Z) ou des coordonnées cylindriques (θ, r, Z) et équipée d'un ensemble pipeteur/aiguille ou d'un système préhenseur pour déplacer la cuvette d'un poste à un autre.

Une partie d'un tel automate est par exemple connue du document FR 2 764 703, au nom de la Demanderesse.

L'aiguille (ou la pipette) est classiquement équipée de moyens de détection capacitifs, permettant notamment de détecter la position à partir de laquelle l'aiguille entre en contact avec le liquide. De tels moyens de détection sont généralement désignés par l'acronyme anglais LLD (pour « Liquid Level Détection »).

D'une manière générale, il est nécessaire de contrôler avec précision la position de l'extrémité de chaque aiguille par rapport aux différents contenants, de manière à éviter que l'aiguille vienne percuter le bord ou le fond d'un contenant, ce qui peut engendrer une casse ou une déformation de l'aiguille, ou encore une dégradation du contenant générant une pollution du produit réactif ou de l'échantillon à analyser.

Or, la réalisation d'un tel dispositif engendre nécessairement des incertitudes de positionnement, dues par exemple au procédé de fabrication de chaque pièce du dispositif (tolérances de fabrication, etc.), au procédé de montage des différentes pièces les unes par rapport aux autres (jeux de montage, imprécisions lors du montage, etc.), ou encore au mode de déplacement du bras équipé de la tête mobile sur laquelle est montée l'aiguille (commande à l'aide de moteurs pas à pas, par exemple).

Il existe donc un besoin de déterminer avec précision les positions des différents contenants fixes par rapport à l'aiguille mobile.

Pour cela, le brevet EP 1 354 185 propose d'utiliser des pions de cartographie dont les positions par rapport aux contenants sont connues. Chaque pion a une forme générale cylindrique, dont l'extrémité supérieure comporte un trou borgne. Des pipettes ou des aiguilles sont montées sur une tête mobile actionnée par un bras déplaçable suivant des axes X, Y et Z orthogonaux entre eux. Les aiguilles sont amenées notamment au contact de la surface interne du trou borgne, de manière à déterminer avec précision les positions des pions de cartographie fixes par rapport aux aiguilles mobiles.

Lors d'un tel procédé, les produits réactifs ou les échantillons contenus dans certaines aiguilles peuvent venir souiller les trous borgnes et engendrer ensuite une contamination des autres aiguilles. Afin d'éviter cela, il est nécessaire de nettoyer les pions de cartographie, ce qui est relativement fastidieux lorsqu'ils comportent des trous borgnes d'un diamètre légèrement supérieur à l'aiguille. D'autres exemples de l'état de la technique peuvent se trouver décrits dans les documents : US2012/065912, WO2012/129105, US5443792 et US5529754.

L'invention a notamment pour but d'apporter une solution simple, efficace et économique aux problèmes précités.

A cet effet, elle propose un procédé de détermination automatique de la position d'au moins un pion fixe de cartographie d'un automate, tel que décrit dans la revendication 1.

L'utilisation d'au moins un pion de cartographie permet de déterminer avec une grande précision la position d'éléments de l'automate situés à proximité du pion de cartographie et dont les positions par rapport audit pion sont référencées. Ainsi, si des contenants (flacons, tubes, cuvettes) sont situés à proximité d'un tel pion de cartographie, il est possible de déterminer leurs positions exactes à l'aide du procédé selon l'invention.

Les étapes (a) et (b) permettent par exemple de déterminer la position d'un point du pion par rapport à l'organe mobile, suivant des axes X et Y (dans un système de coordonnées de type cartésien) ou les coordonnées polaires θ, r (dans un système de coordonnées de type cylindrique), l'étape (c) permettant de déterminer la position en Z du point précité du pion par rapport à l'organe mobile.

L'étape (d) permet de s'assurer que les coordonnées déterminées X, Y ou θ, r du point du pion sont correctes. Cette étape peut également permettre de valider la coordonnée Z du point du pion.

Le pion de cartographie étant exempt de trou borgne, celui-ci ne risque pas de retenir d'éventuelles gouttes de liquide. On limite ainsi les risques de contamination. Un tel pion peut en outre être nettoyé aisément. D'autre part, le plot situé en saillie au sommet du pion et dont la section est proche de celle de l'aiguille, permet de vérifier visuellement et de façon très aisée le bon alignement de l'aiguille avec le pion.

La base présente une forme cubique comportant deux premières faces latérales opposées s'étendant parallèlement à un premier plan défini par un axe Y et un axe Z, deux secondes faces latérales opposées s'étendant sensiblement parallèlement à un second plan défini par un axe X et l'axe Z, et deux faces d'extrémités opposées s'étendant sensiblement parallèlement à un troisième plan défini par l'axe X et l'axe Y, les axes X, Y et Z étant orthogonaux entre eux, la face d'extrémité du plot étant sensiblement parallèle au troisième plan.

Les axes X et Y sont par exemple disposés horizontalement et l'axe Z est par exemple disposé verticalement.

Dans ce cas, le procédé peut comporter les étapes consistant à :
- positionner l'organe mobile en regard de l'une des premières faces latérales de la base,
- déplacer l'organe mobile le long de l'axe X, jusqu'à ce qu'il soit au contact de la première face latérale correspondante,
- en déduire une coordonnée suivant l'axe X, d'au moins un point du pion de cartographie par rapport à l'organe mobile,
- positionner l'organe mobile en regard de l'une des secondes faces latérales de la base,
- déplacer l'organe mobile le long de l'axe Y, jusqu'à ce qu'il soit au contact de la seconde face latérale correspondante,
- en déduire une coordonnée suivant l'axe Y, d'au moins un point du pion de cartographie par rapport à l'organe mobile,
- positionner l'organe mobile en regard de la face d'extrémité du plot,
- déplacer l'organe mobile le long de l'axe Z, jusqu'à ce qu'il soit au contact de la face d'extrémité du plot,
- en déduire une coordonnée suivant l'axe Z, d'au moins un point du pion de cartographie par rapport à l'organe mobile.

De préférence, après contact de l'organe mobile avec la face d'extrémité du plot, l'organe mobile est positionné en regard de la face d'extrémité de la base puis est déplacé suivant l'axe Z jusqu'à ce qu'il soit au contact de la face d'extrémité de la base.

Si le contact avec la face d'extrémité de la base est détecté, alors on garantit que les coordonnées en X et en Y du point précité du pion sont correctement déterminées.

Comme indiqué précédemment, avant d'avoir effectué le procédé selon l'invention, la position de l'organe mobile par rapport au pion de cartographie est connue avec une incertitude qui est majoritairement fonction du procédé de fabrication des pièces et du procédé d'assemblage des pièces entre elles. Cette zone d'incertitude est par exemple de l'ordre de 5 mm sur chacun des axes X, Y et Z, lorsque l'on raisonne en coordonnées cartésiennes. Si la section du pion de cartographie dans le plan XY (c'est-à-dire dans le plan défini par les axes X et Y) est supérieure à la zone d'incertitude dans ce même plan, alors le mouvement de l'organe mobile selon X ou selon Y permet de s'assurer du contact entre l'organe mobile et la face latérale correspondante de la base du pion au moment où l'organe mobile est amené en regard de la face latérale correspondante et que l'organe mobile est ensuite déplacé selon l'axe X ou Y.

A l'inverse, si la section du pion de cartographie dans le plan XY est plus petite que la zone d'incertitude dans ce même plan, alors il n'est pas certain que l'organe mobile rencontre la face latérale correspondante de la base du pion. Dans ce cas, l'étape de recherche précitée peut être rendue nécessaire.

Dans un tel cas, ladite trajectoire de l'organe mobile lors de l'étape de recherche peut avoir une forme de spirale ou comporte une succession de lignes orientées suivant une même direction et traversant chacune la zone déterminée à balayer, lesdites lignes étant décalées les unes des autres.

En outre, si l'organe mobile n'est pas entré en contact avec la surface latérale de la base du pion de cartographie lors d'une étape de recherche, alors une autre étape de recherche est effectuée, à une position différente de l'organe mobile suivant l'axe longitudinal du pion.

Un tel cas peut par exemple se présenter lorsque l'altitude choisie (c'est-à-dire la position suivant Z dans le cas précité) pour l'étape de recherche est mal choisie ou erronée, du fait notamment des incertitudes suivant l'axe Z.

Dans ce cas, plusieurs étapes de recherche sont réalisées, pour différentes altitudes, jusqu'à ce que l'organe mobile rencontre l'une des faces latérales de la base du pion de cartographie.

Le contact entre l'organe mobile et la base ou le plot du pion peut être détecté par mesure capacitive. Dans le cas d'un automate de diagnostic in vitro par exemple, de tels moyens de mesure sont déjà intégrés aux aiguilles ou aux pipettes existantes. Il n'est donc pas nécessaire d'y ajouter des moyens de mesure supplémentaires.

L'automate peut comporter au moins une zone équipée d'éléments fixes, tels par exemple que des éprouvettes, des cuvettes ou des flacons, ladite zone comportant au moins trois pions de cartographie, les positions d'au moins un point de chaque pion de cartographie étant déterminées par rapport à l'organe mobile à l'aide des étapes (a) à (e) précitées, les positions des différents éléments fixes de la zone étant déterminées par interpolation à l'aide des positions des points des différents pions de cartographie.

Les positions des trois pions (au minimum) de cartographie, c'est-à-dire des trois points correspondants, permet de définir un plan. Ce plan est divisé en plusieurs secteurs organisés à la manière d'une matrice. La position réelle de chaque secteur est alors déterminée par rapport aux coordonnées des points des pions de cartographie. Chaque élément fixe peut être associé à un secteur de sorte qu'il est possible de déterminer la position réelle de chaque élément fixe par rapport à l'organe mobile. Il est également possible d'associer plusieurs éléments fixes à un même secteur.

Dans ce cas, la zone peut comporter une platine s'étendant dans un plan, des logements étant ménagés dans ladite platine, les éléments fixes étant montés dans lesdits logements.

De préférence, l'automate est un appareil de diagnostic in vitro, l'organe mobile étant une aiguille ou une pipette de prélèvement.

Un pion de cartographie pour la mise en oeuvre du procédé précité, tel qu'il comporte une base comprenant une surface latérale et une face d'extrémité, un plot de plus faible section que la base faisant saillie depuis la face d'extrémité de la base, ledit plot comportant une face d'extrémité opposée à la base.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue de dessus d'une partie d'un automate de diagnostic in vitro comportant des pions de cartographie,
- la figure 2 est une vue en perspective d'une forme de réalisation d'un pion de cartographie,
- les figures 3 et 4 sont des vues schématiques, respectivement de face et de dessus, illustrant le pion de cartographie ainsi que les différentes étapes successives du procédé selon l'invention,
- la figure 5 est une vue schématique de dessus, illustrant le pion de cartographie ainsi qu'une étape de recherche conformément à l'invention,
- la figure 6 est une vue correspondant à la figure 5, illustrant une variante de réalisation de l'invention,
- la figure 7 est une vue schématique de côté illustrant une platine sur laquelle sont montés des tubes et des pions de cartographie.

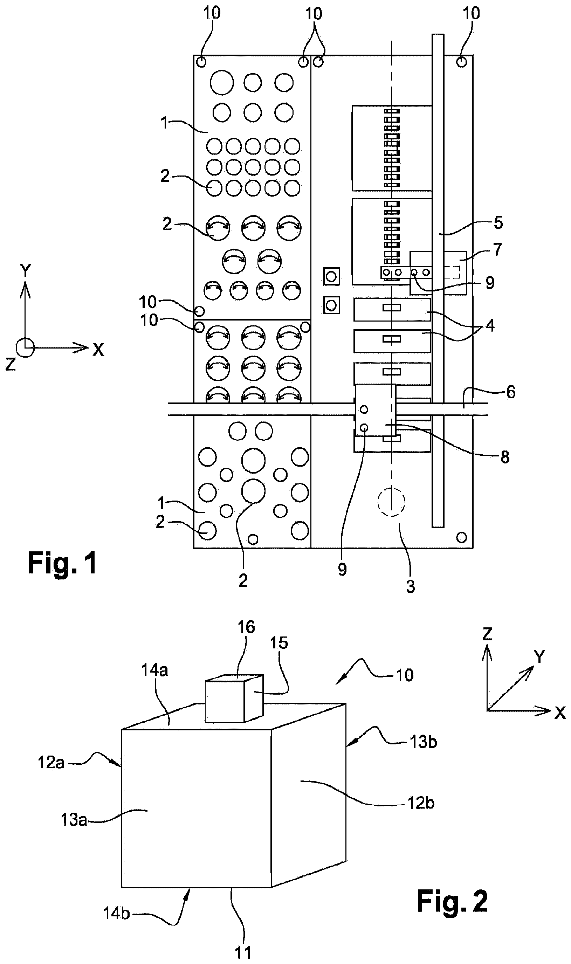

La figure 1 illustre une partie d'un dispositif automatisé de diagnostic in vitro, notamment dans le domaine de l'hémostase.

Un tel dispositif ou automate comporte un bâti fixe sur lequel sont fixées des platines comportant des logements dans lesquels sont montés des contenants se présentant par exemple sous la forme de flacons, de tubes ou de cuvettes de réaction. Le dispositif comporte par exemple une ou plusieurs platines 1 destiné à supporter des flacons 2 contenant des produits réactifs, une platine (non représentée) destinée à supporter des tubes contenant des échantillons de plasma, et une platine 3 destinée à supporter des cuvettes de réaction 4 au sein desquelles sont effectuées des mesures.

Le dispositif comporte en outre au moins un bras motorisé 5, 6 comportant une tête mobile 7, 8 suivant des coordonnées cartésiennes (X, Y, Z) ou des coordonnées cylindriques (θ, r, Z) et équipée d'une ou plusieurs aiguilles 9. Dans la suite de la description, on utilisera les coordonnées cartésiennes afin d'illustrer l'invention, bien qu'il soit également possible d'utiliser des coordonnées cylindriques.

Les aiguilles 9 sont équipées de moyens de détection capacitifs (ou de tout autre moyen de détection en cas d'absence d'aiguille), permettant notamment de détecter la position à partir de laquelle l'aiguille 9 entre en contact avec le liquide. De tels moyens de détection sont généralement désignés par l'acronyme anglais LLD (pour « Liquid Level Détection »). De tels moyens permettent également de détecter le contact entre l'aiguille 9 et des pions de cartographie métalliques 10, montés fixement sur les platines 1, 3 et donc fixes dans l'espace.

Comme cela est mieux visible à la figure 2, chaque pion de cartographie 10 comporte une base 11 en forme de cube, comportant deux faces 12a, 12b opposées et globalement verticales, orientées sensiblement en parallèle au plan YZ, deux faces 13a, 13b opposées et globalement verticales, orientées sensiblement en parallèle du plan XZ, et deux faces 14a, 14b opposées et globalement horizontales, orientées sensiblement en parallèle du plan XY. Les plans YZ, XZ et XY sont défini respectivement par les axes Y et Z, par les axes X et Z et par les axes X et Y.

La face 14a est surmontée d'un plot 15 en forme de cube, de plus faible section que la base 11 dans le plan XY et positionné au centre de la face 14a. Les faces du plot 15 sont sensiblement parallèles aux faces correspondantes de la base 11.

Chaque platine 1, 3 ou chaque partie de la platine 1, 3 est par exemple équipée de trois pions de cartographie 10, pour les raisons détaillées ci-après.

Comme indiqué précédemment, la réalisation d'un tel automate engendre nécessairement des incertitudes de positionnement, dues par exemple au procédé de fabrication de chaque pièce de l'automate (tolérances de fabrication, etc.), au procédé de montage des différentes pièces les unes par rapport aux autres (jeux de montage, imprécisions lors d'un montage manuel par exemple, etc.), ou encore au mode de déplacement des bras 5, 6 équipé des tête mobiles 7, 8 sur lesquelles sont montées les aiguilles 9 (commande à l'aide de moteurs pas à pas, par exemple).

Or, il est nécessaire de contrôler avec précision la position de l'extrémité de chaque aiguille 9 par rapport aux différents contenants 2, 4 (flacons, tubes, cuvettes), de manière à éviter que l'aiguille 9 vienne percuter le bord d'un contenant 2, 4, ce qui peut engendrer une casse ou une déformation de l'aiguille 9, ou encore une dégradation du contenant 2, 4 générant une pollution du produit réactif ou de l'échantillon à analyser.

L'invention propose pour cela de déterminer avec précision les coordonnées d'au moins un point de chaque pion de cartographie 10 de l'automate, en vue d'en déduire les positions précises de chaque contenant 2, 4, les positions des contenants 2, 4 étant connues et référencées par rapport aux pions de cartographie 10.

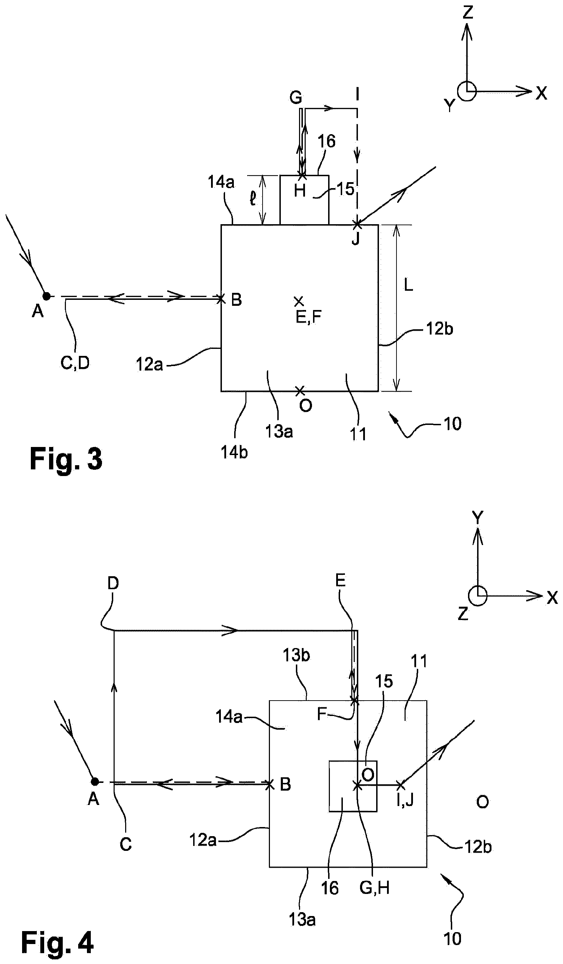

Les figures 3 et 4 illustrent un procédé de détermination de la position d'un pion de cartographie 10, conformément à une forme de réalisation de l'invention. Sur ces figures sont illustrés la trajectoire de l'extrémité d'une aiguille mobile 9 ainsi qu'un pion de cartographie 10.

On définit par O le centre de la face 14b, le point O ayant pour coordonnées XO, YO, ZO. La base 11 a une largueur notée L et le plot 15 a une largeur notée l.

Le procédé selon l'invention comporte les étapes successives suivantes.

Tout d'abord, l'aiguille 9 est amenée à proximité du pion 10 par un mouvement rapide jusqu'à un point A. Les mouvements à vitesse rapide sont illustrés ici en traits forts. Le point A est situé en-dehors de la zone d'incertitude. La zone d'incertitude est la zone dans laquelle le pion 10 peut potentiellement se trouver, compte tenu de toutes les incertitudes estimées dues aux tolérances de fabrication, aux jeux de montage, etc. On garantit ainsi que l'aiguille 9 ne percute pas le pion 10 en se déplaçant à vitesse rapide vers le point A.

Le point A est situé en regard (suivant l'axe X) de la position estimée du centre de la face 12a de la base 11 du pion 10.

L'aiguille 9 est ensuite déplacée à faible vitesse (ce qui est représenté en traits pointillés), suivant l'axe X et dans le sens positif de cet axe. Un tel déplacement est noté +X, par convention. Ce déplacement est poursuivi jusqu'à ce que le contact entre l'aiguille 9 et la base 11 soit détecté. Le point de contact est référencé B.

La coordonnée XB du point B est alors déterminée et il est possible de calculer la coordonnée XO du pion 10 selon la formule XO=XB+0,5L.

L'aiguille 9 est ensuite écartée rapidement du pion 10 suivant un déplacement -X (c'est-à-dire suivant l'axe X et dans le sens négatif), d'une valeur correspondant par exemple à la largeur L de la base 11, jusqu'à atteindre le point C.

L'aiguille 9 subit alors un déplacement rapide en +Y, par exemple d'une valeur L, jusqu'au point D, puis un déplacement rapide en +X, par exemple d'une valeur de 1,5L, jusqu'au point E. Le point E est alors situé en regard de la face 13b de la base 11. L'aiguille 9 est ensuite déplacée en -Y, à faible vitesse, jusqu'à détecter au point F le contact entre l'aiguille 9 et la base 11 sur la face 13b.

La coordonnée YF du point F est alors déterminée et il est possible de calculer la coordonnée YO du pion 10 selon la formule YO=YF-0,5L. L'aiguille 9 est ensuite écartée rapidement du pion 10 en +Y, de façon à revenir au point E par exemple.

L'extrémité de l'aiguille 9 est alors amenée rapidement au point G en regard du centre de la face 16 du plot 15 selon l'axe Z. La face 16 est opposée à la face 14a de la base 11 et parallèle à cette face 14a. Compte tenu de la structure du pion 10, le centre de la face 16 a pour coordonnées XO, YO dans le plan XY, ces coordonnées ayant été déterminées précédemment. La position en Z du point G ainsi que la trajectoire entre les points E et G permettent d'éviter une collision entre l'aiguille 9 et le pion 10.

L'aiguille 9 est ensuite déplacée à faible vitesse en -Z, jusqu'à entrer en contact au point H avec la face 16 du plot 15. La coordonnée ZH du point H est alors déterminée et il est possible de calculer la coordonnée ZO du pion 10 selon la formule ZO=ZF-(L+l).

L'extrémité de l'aiguille 9 est ensuite décalée latéralement (c'est-à-dire en X et/ou en Y), de façon à être située en regard de la face 14a de la base 11 (point I). L'aiguille 9 est alors déplacée à faible vitesse en -Z, jusqu'à entrer au contact avec ladite face 14a (point J). Si la coordonnée ZJ vérifie par exemple la relation ZJ=ZH-I, alors on peut garantir que les coordonnées XO, YO et ZO sont correctes.

L'aiguille 9 peut ensuite être écartée rapidement du pion 10 et être dirigée vers le pion de cartographie 10 suivant, par exemple.

Ce procédé peut être répété pour chaque pion de cartographie 10 de façon à déterminer, pour chaque pion 10, les coordonnées XO, YO, ZO des points de référence O des pions 10.

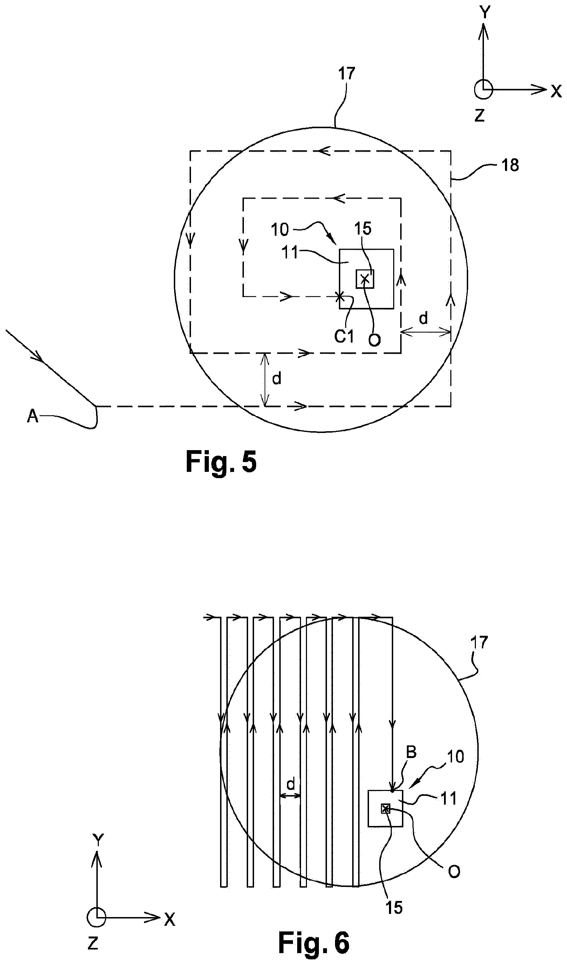

La figure 5 illustre le cas où la zone d'incertitude 17 est plus importante que les dimensions du pion 10. Dans ce cas, il existe un risque que l'aiguille 9 ne rencontre pas la face 12a du pion 10 lors de son déplacement depuis le point A (pas de détection du point B). Dans ce cas, on procède à une étape de recherche du pion de cartographie 10 consistant à déplacer l'extrémité de l'aiguille 9 de façon à balayer une zone déterminée suivant une trajectoire 18 définie, jusqu'à ce que ladite extrémité soit au contact de l'une des faces latérales 12a, 12b, 13a, 13b de la base 11, la position de ladite extrémité suivant l'axe Z restant inchangée lors cette étape de recherche.

Dans le cas représenté à la figure 5, la trajectoire 18 a une forme de spirale, plus particulièrement une forme de spirale « carrée » définie par une succession de lignes orientées alternativement suivant l'axe X et suivant l'axe Y, les lignes composant cette spirale 18 étant écartées les unes des autres d'une valeur d fonction de la largeur L de la base 11, par exemple.

La figure 6 illustre, une variante de réalisation qui diffère de celle exposée en référence à la figure 5 en ce que la trajectoire 18 a une forme dite de peigne, et comporte une succession de lignes orientées suivant une même direction, ici la direction Y et traversant chacune la zone d'incertitude 17 dans la direction Y précitée, lesdites lignes étant décalées les unes des autres suivant l'axe X, d'une valeur d qui est fonction de la largeur L de la base 11, par exemple.

Si, lors d'une telle étape de recherche, l'extrémité de l'aiguille 9 n'a pas rencontré le pion 10, alors c'est que cette extrémité se situe à une coordonnée suivant Z qui est plus importante que la coordonnée suivant Z de la face 16 ou que la face 14a du pion 10.

Dans un tel cas, l'extrémité de l'aiguille 9 est à nouveau positionnée à l'extérieur de la zone d'incertitude 17, puis cette extrémité est déplacée en -Z, suivant une valeur qui est par exemple fonction de la largeur L de la base 11 Une nouvelle étape de recherche peut alors débuter. On procède ainsi jusqu'à établir le contact entre l'aiguille 9 et le pion 10. Une fois le contact établi (détection du point B), il est possible de poursuivre les différentes étapes du procédé détaillées ci-avant (à partir du point B).

Comme indiqué précédemment, chaque platine 1, 3 ou chaque partie de la platine 1, 3 comporte trois pions 10 fixes (au minimum) par rapport auxdites platines 1, 3. Le procédé décrit précédemment permet de déterminer avec précision les coordonnées XO, YO, ZO d'au moins un point O de chaque pion 10. Chaque platine 1, 3 comporte des logements dans lesquels sont montés des contenants 2, 4, les positions des logements (et donc des contenants) étant connues et référencées par rapport aux points O précités.

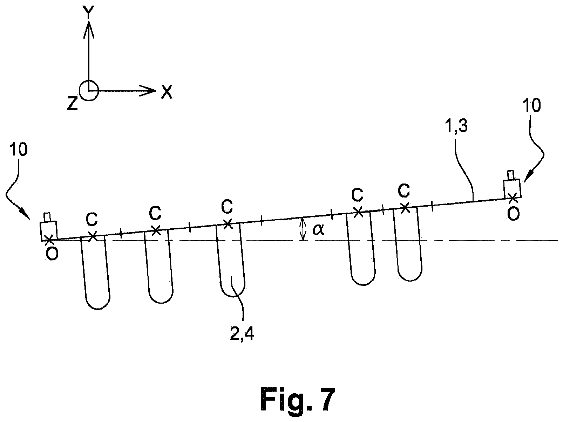

La détermination des différents points O permet de corriger par exemple le défaut d'horizontalité, c'est-à-dire l'angle α (figure 7) par rapport au plan XY, la flexion ou la torsion de chaque platine 1, 3 ou de chaque zone de la platine 1, 3 et calculer ensuite, par interpolation, les coordonnées exactes (ou quasiment exactes) d'au moins un point C de chaque contenant 2, 4. Le point C est par exemple le centre de l'ouverture du contenant correspondant 2, 4.

Une fois que les coordonnées des points C des contenants 2, 4 sont établies avec précision, il est alors possible de déplacer de façon sûre les aiguilles 9, sans risque de collision avec les platines 1, 3 ou avec les contenants 2, 4.

## Revendications

1. Procédé de détermination de la position d'au moins un pion fixe de cartographie (10) d'un automate, ledit pion (10) comportant une base (11) comprenant une surface latérale et une face d'extrémité (14a), un plot (15) de plus faible section que la base (11) faisant saillie depuis la face d'extrémité (14a) de la base (11), ledit plot (15) comportant une face d'extrémité (16) opposée à la base (11), ledit procédé comportant les étapes consistant à :
(a) déplacer un organe mobile (9) jusqu'à ce qu'il soit au contact d'une première zone (12a) de la surface latérale de la base (11),
(b) déplacer l'organe mobile (9) jusqu'à ce qu'il soit au contact d'une seconde zone (13b) de la surface latérale de la base (11),
(c) déplacer l'organe mobile (9) jusqu'à ce qu'il soit au contact de la face d'extrémité (16) du plot (15),
(d) déplacer l'organe mobile (9) jusqu'à ce qu'il soit au contact de la face d'extrémité (14a) de la base (11),
(e) en déduire les coordonnées (XO, YO, ZO) d'au moins un point (O) du pion de cartographie (10) par rapport à l'organe mobile (9),
le procédé comportant au moins une étape de recherche du pion de cartographie (10) consistant à déplacer l'organe mobile (9) de façon à balayer une zone déterminée (17) suivant une trajectoire définie (18), jusqu'à ce qu'il soit au contact de la surface latérale (12a, 12b, 13a, 13b) de la base (11), la position de l'organe mobile (9) suivant un axe longitudinal (Z) du pion (10) restant inchangée lors l'étape de recherche, et en ce que si l'organe mobile (9) n'est pas entré en contact avec la surface latérale (12a, 12, 13a, 13b) de la base (11) du pion de cartographie (10) lors d'une étape de recherche, alors une autre étape de recherche est effectuée, à une position différente de l'organe mobile (9) suivant l'axe longitudinal (Z) du pion (10), et
**caractérisé en ce qu'**on utilise un pion dont la base (11) présente une forme parallélépipédique comportant deux premières faces latérales opposées (12a, 12b) s'étendant sensiblement parallèlement à un premier plan (YZ) défini par un axe Y et un axe Z, deux secondes faces latérales opposées (13a, 13b) s'étendant sensiblement parallèlement à un second plan (XZ) défini par un axe X et l'axe Z, et deux faces d'extrémités opposées (14a, 14b) s'étendant sensiblement parallèlement à un troisième plan (XY) défini par l'axe X et l'axe Y, les axes X, Y et Z étant orthogonaux entre eux, la face d'extrémité (16) du plot (15) étant parallèle au troisième plan (XY), et
**caractérisé en ce qu'**il comporte les étapes consistant à :
- positionner l'organe mobile (9) en regard de l'une (12a) des premières faces latérales (12a, 12b) de la base (11),
- déplacer l'organe mobile (9) le long de l'axe X, jusqu'à ce qu'il soit au contact de la première face latérale correspondante (12a),
- en déduire une coordonnée (XO) suivant l'axe X, d'au moins un point (O) du pion de cartographie (10) par rapport à l'organe mobile (9),
- positionner l'organe mobile (9) en regard de l'une (13b) des secondes faces latérales (13a, 13b) de la base (11),
- déplacer l'organe mobile (9) le long de l'axe Y, jusqu'à ce qu'il soit au contact de la seconde face latérale correspondante (13b),
- en déduire une coordonnée (YO) suivant l'axe Y, d'au moins un point (O) du pion de cartographie (10) par rapport à l'organe mobile (9),
- positionner l'organe mobile (9) en regard de la face d'extrémité (16) du plot (15),
- déplacer l'organe mobile (9) le long de l'axe Z, jusqu'à ce qu'il soit au contact de la face d'extrémité (16) du plot (15),
- en déduire une coordonnée (ZO) suivant l'axe Z, d'au moins un point (O) du pion de cartographie (10) par rapport à l'organe mobile (9), et
**caractérisé en ce que** le plot (15) est de forme cubique et est positionné au centre de la face d'extrémité (14a) de la base (11), et **en ce que** la base (11) est en forme de cube,
et **en ce que** les faces du plot (15) sont sensiblement parallèles aux faces correspondantes de la base (11).

2. Procédé selon la revendication 1, **caractérisé en ce qu'**après contact de l'organe mobile (9) avec la face d'extrémité (16) du plot (15), l'organe mobile (9) est positionné en regard de la face d'extrémité (14a) de la base (11) puis est déplacé suivant l'axe Z jusqu'à ce qu'il soit au contact de la face d'extrémité (14a) de la base (11).

3. Procédé selon l'une des revendications précédentes, **caractérisé en ce que** ladite trajectoire (18) de l'organe mobile (9) lors de l'étape de recherche a une forme de spirale ou comporte une succession de lignes orientées suivant une même direction et traversant chacune la zone déterminée à balayer, lesdites lignes étant décalées les unes des autres.

4. Procédé selon l'une des revendications précédentes, **caractérisé en ce que** le contact entre l'organe mobile (9) et la base (11) ou le plot (15) du pion (10) est détecté par mesure capacitive.

5. Procédé selon l'une des revendications 1 à 6, **caractérisé en ce qu'**on utilise un automate comportant au moins une zone (1, 3) équipée d'éléments fixes, tels par exemple que des éprouvettes, des cuvettes (4) ou des flacons (2), ladite zone (1, 3) comportant au moins trois pions de cartographie (10), les positions d'au moins un point (O) de chaque pion de cartographie (10) étant déterminées par rapport à l'organe mobile (9) à l'aide des étapes (a) à (e), les positions des différents éléments fixes (2, 4) de la zone (1, 3) étant déterminées par interpolation à l'aide des positions des points (O) des différents pions de cartographie (10).

6. Procédé selon la revendication 5, **caractérisé en ce que** la zone comporte une platine (1, 3) s'étendant dans un plan, des logements étant ménagés dans ladite platine (1, 3), les éléments fixes (2, 4) étant montés dans lesdits logements.

7. Procédé selon l'une des revendications précédentes, **caractérisé en ce qu'**on utilise comme automate un appareil de diagnostic in vitro, l'organe mobile étant une aiguille (9) ou une pipette de prélèvement.

## Patentansprüche

1. Verfahren zur Bestimmung der Position mindestens einer feststehenden Kartographiemarkierung (10) eines Automaten, wobei die Markierung (10) einen Sockel (11) mit einer Seitenfläche und einer Endfläche (14a) umfasst, einen über die Endfläche (14a) des Sockels (11) ragenden Aufsatz (15) mit kleinerem Querschnitt als der Sockel (11), wobei der Aufsatz (15) eine dem Sockel (11) gegenüberliegende Endfläche (16) aufweist, wobei das Verfahren Schritte umfasst, die darin bestehen,:
(a) ein bewegliches Element (9) so weit zu verschieben, bis es einen ersten Bereich (12a) der Seitenfläche des Sockels (11) berührt,
(b) das bewegliche Element (9) so weit zu verschieben, bis es einen zweiten Bereich (13b) der Seitenfläche des Sockels (11) berührt,
(c) das bewegliche Element (9) so weit zu verschieben, bis es die Endfläche (16) des Aufsatzes (15) berührt,
(d) das bewegliche Element (9) so weit zu verschieben, bis es die Endfläche (14a) des Sockels (11) berührt,
(e) daraus die Koordinaten (XO, YO, ZO) mindestens eines Punktes (0) der Kartierungsmarkierung (10) relativ zu dem beweglichen Element (9) abzuleiten,
wobei das Verfahren mindestens einen Schritt umfasst, in dem die Markierung (10) gesucht und das bewegliche Element (9) so verschoben wird, dass ein bestimmter Bereich (17) in einer vordefinierten Bahn (18) abgetastet wird, bis es die Seitenfläche (12a, 12b, 13a, 13b) des Sockels (11) berührt, wobei die Position des beweglichen Elements (9) auf einer Längsachse (Z) der Markierung (10) während der Suche unverändert bleibt, und ein weiterer Suchschritt an einer anderen Position des beweglichen Elements (9) auf der Längsachse (Z) der Markierung (10) durchgeführt wird, wenn das bewegliche Element (9) während der Suche nicht mit der Seitenfläche (12a, 12, 13a, 13b) des Sockels (11) der Markierung (10) in Berührung kam, und
**dadurch gekennzeichnet, dass** eine Markierung verwendet wird, deren Sockel (11) die Form eines Parallelepipeds mit zwei ersten, einander gegenüberliegenden Seitenflächen (12a, 12b) hat, die sich im Wesentlichen parallel zu einer ersten, durch eine Y-Achse und eine Z-Achse abgegrenzte Ebene (YZ) erstrecken, und zwei zweite gegenüberliegende Seitenflächen (13a, 13b), die sich im Wesentlichen parallel zu einer zweiten, durch eine X-Achse und die Z-Achse abgegrenzte Ebene (XZ) erstrecken, und zwei einander gegenüberliegende Endflächen (14a, 14b), die sich im Wesentlichen parallel zu einer dritten, durch die X-Achse und die Y-Achse abgegrenzte Ebene (XY) erstrecken, wobei die X-, Y- und Z-Achsen orthogonal zueinander stehen und die Endfläche (16) des Aufsatzes (15) parallel zur dritten Ebene (XY) ist, und
**dadurch gekennzeichnet, dass** es Schritte umfasst, die darin bestehen:
- das bewegliche Element (9) gegenüber einer (12a) der ersten Seitenflächen (12a, 12b) des Sockels (11) zu positionieren,
- das bewegliche Element (9) auf der X-Achse so weit zu verschieben, bis es die entsprechende erste Seitenfläche (12a) berührt,
- daraus auf der X-Achse eine Koordinate (XO) mindestens eines Punkts (0) der Kartogaphiemarkierung (10) relativ zum beweglichen Element (9) abzuleiten,
- das bewegliche Element (9) gegenüber einer (13b) der zweiten Seitenflächen (13a, 13b) des Sockels (11) zu positionieren,
- das bewegliche Element (9) auf der Y-Achse so weit zu verschieben, bis es die entsprechende zweite Seitenfläche (13b) berührt,
- daraus auf der Y-Achse eine Koordinate (YO) mindestens eines Punkts (0) der Kartogaphiemarkierung (10) relativ zum beweglichen Element (9) abzuleiten,
- das bewegliche Element (9) gegenüber der Endfläche (16) des Aufsatzes (15) zu positionieren,
- das bewegliche Element (9) auf der Z-Achse so weit zu verschieben, bis es die Endfläche (16) des Aufsatzes (15) berührt,
- daraus auf der Z-Achse eine Koordinate (ZO) mindestens eines Punkts (0) der Kartogaphiemarkierung (10) relativ zum beweglichen Element (9) abzuleiten, und
**dadurch gekennzeichnet, dass** der Aufsatz (15) eine kubische Form hat und in der Mitte der Endfläche (14a) der Sockel (11) angeordnet ist, und dass der Sockel (11) würfelförmig ist,
und dass die Flächen des Aufsatzes (15) im Wesentlichen parallel zu den entsprechenden Flächen des Sockels (11) sind.

2. Verfahren nach Anspruch 1, **dadurch gekennzeichnet, dass** das bewegliche Element (9) nach der Berührung der Endfläche (16) des Aufsatzes (15) gegenüber der Endfläche (14a) des Sockels (11) positioniert ist und dann auf der Z-Achse verschoben wird, bis es die Endfläche (14a) des Sockels (11) berührt.

3. Verfahren nach einem der vorhergehenden Ansprüche, **dadurch gekennzeichnet, dass** die genannte Bahn (18) des beweglichen Elements (9) während des Suchschritts eine spiralförmige Form aufweist oder eine Abfolge von Linien umfasst, die in ein und derselben Richtung ausgerichtet sind und jeweils durch die bestimmte abzutastende Zone verlaufen, wobei die genannten Linien zueinander versetzt sind.

4. Verfahren nach einem der vorhergehenden Ansprüche, **dadurch gekennzeichnet, dass** der Kontakt zwischen dem beweglichen Element (9) und dem Sockel (11) oder dem Aufsatz (15) der Markierung (10) durch kapazitive Messung erfasst wird.

5. Verfahren nach einem der Ansprüche 1 bis 6, **dadurch gekennzeichnet, dass** man einen Automaten verwendet, in dem mindestens ein Bereich (1, 3) mit festen Elementen, wie beispielsweise Reagenzgläsern, Küvetten (4) oder Flaschen (2), ausgestattet ist, wobei der Bereich (1, 3) mindestens drei Kartographiemarkierungen (10) umfasst, wobei die Positionen mindestens eines Punktes (0) jeder Kartographiemarkierung (10) in Bezug auf das bewegliche Element (9) mit Hilfe der Schritte (a) bis (e) bestimmt werden, wobei die Positionen der festen Elemente (2, 4) des Bereichs (1, 3) mit Hilfe der Positionen der Punkte (0) der Kartographiemarkierung (10) durch Interpolation bestimmt werden.

6. Verfahren nach Anspruch 5, **dadurch gekennzeichnet, dass** der Bereich eine Platte (1, 3) umfasst, die sich in einer Ebene erstreckt, wobei Aufnahmen in der Platte (1, 3) ausgebildet und die festen Elemente (2, 4) in die Aufnahmen montiert sind.

7. Verfahren nach einem der vorhergehenden Ansprüche, **dadurch gekennzeichnet, dass** ein In-vitro-Diagnosegerät als Automat verwendet wird, wobei das bewegliche Element eine Entnahmekanüle (9) oder eine Entnahmepipette ist.

## Claims

1. A method of determining the position of at least one fixed cartography token (10) of an automaton, said token (10) comprising a base (11) comprising a lateral surface and an end face (14a), a stud (15) of smaller cross-section than the base (11) projecting from the end face (14a) of the base (11), said stud (15) comprising an end face (16) opposite the base (11), said method comprising the steps consisting in:
(a) moving a movable member (9) until it contacts a first zone (12a) of the lateral surface of the base (11),
(b) moving the movable member (9) until it contacts a second zone (13b) of the lateral surface of the base (11),
(c) moving the movable member (9) until it contacts the end face (16) of the stud (15),
(d) moving the movable member (9) until it contacts the end face (14a) of the base (11),
(e) deducing therefrom the coordinates (XO, YO, ZO) of at least one point (0) of the cartography token (10) with respect to the movable member (9),
the method comprising at least one step of searching for the cartography token (10) consisting in moving the movable member (9) so as to scan a determined zone (17) along a defined trajectory (18), until it contacts the lateral surface (12a, 12b, 13a, 13b) of the base (11), the position of the movable member (9) along a longitudinal axis (Z) of the token (10) remaining unchanged during the searching step, and in that if the movable member (9) is not in contact with the lateral surface (12a, 12, 13a, 13b) of the base (11) of the cartography token (10) during a searching step, then another searching step is executed, at a different position of the movable member (9) along the longitudinal axis (Z) of the token (10), and
**characterized in that** a token is used whose base (11) has a parallelepiped shape comprising two first opposite lateral faces (12a, 12b) extending substantially parallel to a first plane (YZ) defined by a Y axis and a Z axis, and two second opposite lateral faces (13a), 13b) extending substantially parallel to a second plane (XZ) defined by an X axis and the Z axis, and two opposite end faces (14a, 14b) extending substantially parallel to a third plane (XY) defined by the X axis and the Y axis, the X, Y and Z axes being orthogonal to each other, the end face (16) of the stud (15) being parallel to the third plane (XY), and
**characterised in that** it comprises the following steps:
- positioning the movable member (9) opposite one (12a) of the first lateral faces (12a, 12b) of the base (11),
- moving the movable member (9) along the X axis until it contacts the corresponding first lateral face (12a),
- deducing therefrom a coordinate (XO) along the X axis, of at least one point (0) of the cartography token (10) with respect to the movable member (9),
- positioning the movable member (9) opposite one (13b) of the second lateral faces (13a, 13b) of the base (11),
- moving the movable member (9) along the Y-axis until it contacts the corresponding second lateral face (13b),
- deducing therefrom a coordinate (YO) along the Y-axis of at least one point (0) of the cartography token (10) with respect to the movable member (9),
- positioning the movable member (9) opposite the end face (16) of the stud (15),
- moving the movable member (9) along the Z axis until it contacts the end face (16) of the stud (15),
- deducing therefrom a coordinate (ZO) along the Z axis, of at least one point (0) of the cartography token (10) with respect to the movable member (9), and
**characterized in that** the stud (15) is cubic in shape and is positioned at the center of the end face (14a) of the base (11), and **in that** the base (11) is cube-shaped,
and **in that** the faces of the stud (15) are substantially parallel to the corresponding faces of the base (11).

2. A method according to claim 1, **characterized in that** after the movable member (9) contacts the end face (16) of the stud (15), the movable member (9) is positioned opposite the end face (14a) of the base (11) and is then moved along the Z axis until it contacts the end face (14a) of the base (11) .

3. A method according to one of the preceding claims, **characterized in that** said trajectory (18) of the movable member (9) during the searching step has a spiral shape or comprises a succession of lines oriented in the same direction and each passing through the determined zone to be scanned, said lines being offset from one another.

4. A method according to one of the preceding claims, **characterized in that** the contact between the movable member (9) and the base (11) or the stud (15) of the token (10) is detected by a capacitive measurement.

5. A method according to one of claims 1 to 6, **characterized in that** an automaton is used comprising at least one zone (1, 3) equipped with fixed elements, such as for example test tubes, bowls (4) or bottles (2), said zone (1, 3) comprising at least three cartography tokens (10), the positions of at least one point (0) of each cartography token (10) being determined with respect to the movable member (9) using steps (a) to (e), the positions of the individual fixed elements (2, 4) of the zone (1, 3) being determined by interpolation using the positions of the points (0) of the individual cartography tokens (10).

6. A method according to claim 5, **characterized in that** the zone comprises a plate (1, 3) extending in a plane, with housings being provided in said plate (1, 3), the fixed elements (2, 4) being mounted in said housings.

7. A method according to one of the preceding claims, **characterized in that** an in vitro diagnostic apparatus is used as an automaton, the movable member being a needle (9) or a sampling pipette.
